Europäisches Patentamt

European Patent Office

Office européen des brevets

(11) Publication number: **0 186 991**
A2

# EUROPEAN PATENT APPLICATION

(21) Application number: 85308975.3

(22) Date of filing: 10.12.85

(51) Int. Cl.⁴: **E 21 D 21/00**

(30) Priority: 10.12.84 ZA 849588

(71) Applicant: **Hall, Alethea Rosalind Melanie, 40 Driefontein Muldersdrift, Krugersdorp Transvaal (ZA)**

(43) Date of publication of application: 09.07.86
**Bulletin 86/28**

(72) Inventor: **Hall, Alethea Rosalind Melanie, 40 Driefontein Muldersdrift, Krugersdorp Transvaal (ZA)**

(84) Designated Contracting States: **AT BE CH DE FR GB IT LI LU NL SE**

(74) Representative: **Higgins, Michael Roger et al, Marks & Clerk 57/60 Lincoln's Inn Fields, London WC2A 3LS (GB)**

(54) **Anchor bolt.**

(57) An anchor bolt (10) which is adapted to be located in a drilled hole (12), e.g. in a rock face, comprises an expandable shell (20) which is designed to be displaced radially outwardly into engagement with the surrounds of the drilled hole by expansion means, such as expansion member (18) or grout. The expandable shell is comprised of a plastic material which has been stretched in one or preferably two directions during manufacture to align the plastic molecular chains. The expandable shell is very strong and is corrosion resistant.

- 1 -

**" ANCHOR BOLT "**

BACKGROUND OF THE INVENTION

This invention relates to an elongate tension bearing member commonly termed an anchor bolt or a roof bolt or a rock bolt.

Anchor bolts, which may for example be used as stope roof supports in underground mines, or for soil stabilisation, may consist of a bolt member, an expansion member in the form of a plug, which may be tapered, in screw threaded engagement with the bolt member towards one end thereof, and an expandable shell located around the expansion member. The expandable shell may comprise two or more leaves or segments located around the expansion member or a tubular shell located around the expansion member and adapted to be split into segments. In use, the anchor bolt is located in a drilled hole for example in a rock body, with the expansion member near the blind end of the hole. On rotation of the bolt member, the expansion member moves axially down the bolt member and forces the expandable shell radially outwardly so that the shell comes into contact with the surrounds of the drilled hole to hold the anchor bolt in the hole. A device for spreading the load over an area surrounding the exit of the drilled hole, such as a plate, may be located and held on the free end of the bolt member. In this way, the anchor bolt serves to anchor an area of the rock face to a point within the rock body.

The bolt member and the expansion member of conventional anchor bolts are generally constructed of a metal material such as a ferrous alloy.

Alternatively, the anchor bolt may consist simply of an expandable shell as described above. In use, the expandable shell is located in a drilled hole. A suitable wedge or the like may be forced up the expandable shell to at or near the top end thereof, to hold the expandable shell in position in the drilled hole. Thereafter a suitable grout is introduced into the expandable shell which displaces the expandable shell radially outwardly so that the shell comes into contact with the surrounds of the drilled hole to hold the anchor bolt in the hole.

## SUMMARY OF THE INVENTION

According to the invention there is provided an anchor bolt or the like adapted to be located in a drilled hole which comprises an expandable shell adapted to be displaced radially outwardly into engagement with the surrounds of the drilled hole, by expansion means is characterised in that the expandable shell comprises a plastic material which has been stretched in at least one direction during manufacture to align the plastic molecular chains.

Preferably, the expandable shell comprises a plastic material which has been stretched in two directions during manufacture, i.e. a biaxially oriented plastic material.

The expansion means may comprise a bolt member and an expansion member located on an end of the bolt member which is adapted to be located in the blind end of the drilled hole, the expandable shell being located around the expansion member, the bolt member being adapted to be rotated to cause relative axial movement between the bolt member and the expansion member, the expansion member causing the expandable shell to be displaced radially outwardly into engagement with the surrounds of the drilled hole.

The bolt member preferably also comprises a biaxially oriented plastic material.

Alternatively the expansion means may comprise a grout which is adapted to be introduced into the expandable shell causing the expandable shell to be displaced radially outwardly into engagement with the surrounds of the drilled hole.

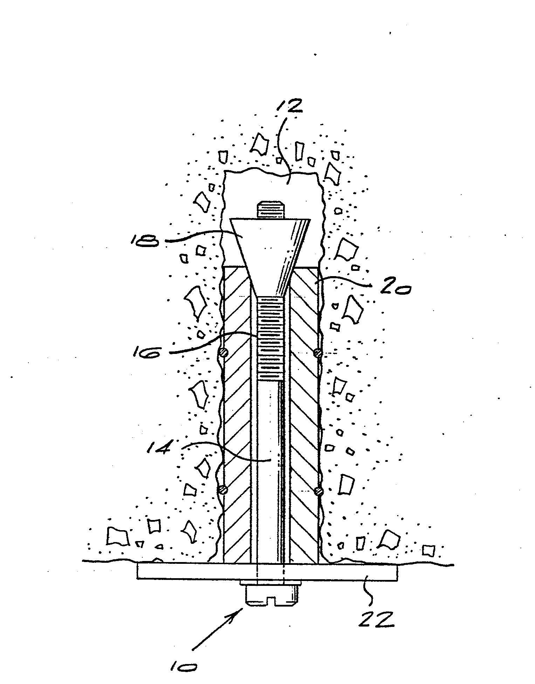

BRIEF DESCRIPTION OF THE DRAWING

The drawing is a schematic view of one embodiment of an anchor bolt according to the invention.

DESCRIPTION OF PREFERRED EMBODIMENTS

Referring to the drawing, an anchor bolt 10, adapted to be located in a drilled hole 12, comprises a bolt member 14, having a threaded portion 16, an expansion member 18 located on the threaded portion 16 of the bolt member 14 and an expandable shell 20 located around the expansion member 18. A plate 22 for spreading the load over an area surrounding the exit of the drilled hole 12 is located on the bolt member 14.

In use, the anchor bolt 10 is located in the drilled hole 12, and then the bolt member 14 is rotated to cause relative axial movement between the bolt member 14 and the expansion member 18. The expansion member 10 causes the expandable shell 20 to be displaced radially outwardly into engagement with the surrounds of the drilled hole 12. In this way the anchor bolt 10 serves to anchor an area of the rock face to a point within the rock body.

The expandable shell and the bolt member of the anchor bolt of the invention comprise a plastic material which has been stretched in one direction or in two directions during manufacture. This stretching aligns the plastic molecular chains which imparts strength to the plastic material.

Suitable plastic materials which may be used for the manufacture of the bolt member include polyethylene terephthalate, polypropylene, polyvinyl chloride and acrylic nitrile.

The bolt member may comprise a solid plastic rod. Such a rod may be manufactured by the injection moulding or extrusion processes, mechanically stretched along its length at a controlled temperature, and then allowed to cool.

Alternatively, the bolt member may comprise a single hollow plastic tube or a set of hollow plastic tubes arranged and contained within a jacket tube. Such a tube may be manufactured by the injection moulding or extrusion moulding processes, stretched along its length at a controlled temperature and then allowed to cool. The stretching process may be carried out by mechanical means or by subjecting the tube to pneumatic pressure.

The expansion member may be, for example, a tapered wedge which is adapted to be screw threaded onto the bolt member, which itself will be provided with a complementary thread.

Alternatively, the anchor bolt of the invention may simply comrpise an expandable shell similar to the one illustrated in the drawing, which is designed to be displaced radially outwardly into engagement with the surrounds of a drilled hole by the introduction of a grout or cement or the like into the expandable shell. The grout also serves to anchor the anchor bolt in the drilled hole.

The expandable shell of either embodiment of the invention may include protrusions on the outer walls thereof to which may be attached an attachment which is designed to protrude from the drilled hole. The attachment may for example include a ring to which items could be attached.

The anchor bolt of the invention has many uses. It may be used as a stope roof support in an underground mine. It may also be used for soil stabilisation. In this case, conventionally, a concrete slab is cast to cover an area of soil to be stabilised and then the slab is tied to the soil by means of anchor bolts. Other uses of the anchor bolt of the invention are also contemplated.

The anchor bolt of the invention has several advantages over conventional anchor bolts. Firstly, as it is made of a plastic material it is resistant to the corrosive effects of acidic conditions. Such acidic conditions are often found in underground mines especially where the rock has a high pyrites content. Ferrous alloy bolt members are subject to high corrosion in these conditions.

0186991

Secondly, the anchor bolt of the invention is not as hard as a similar ferrous alloy bolt. The hardness of such ferrous alloy bolts makes subsequent reworking of the rock face in which they are employed difficult, as they can cause damage to excavation equipment. This problem does not arise to the same extent with plastic bolts.

Finally, the method of manufacture of the anchor bolt of the invention permits great design flexibility.

CLAIMS

1.

An anchor bolt adapted to be located in a drilled hole comprising an
expandable shell adapted to be displaced radially outwardly into
engagement with the surrounds of the drilled hole by expansion means,
is characterised in that the expandable shell comprises a plastic
material which has been stretched in at least one direction during
manufacture to align the plastic molecular chains.

2.

An anchor bolt according to claim 1 wherein the expandable shell
comprises a biaxially oriented plastic material.

3.

An anchor bolt according to claim 1 or claim 2 wherein the plastic
material comprises polyethylene terephthalate, polypropylene,
polyvinyl chloride or acrylic nitrile.

4.

An anchor bolt according to any one of claims 1 to 3 wherein the
expansion means comprises a bolt member and an expansion member
located on an end of the bolt member which is adapted to be located in
the blind end of the drilled hole, the expandable shell being located
around the expansion member, the bolt member being adapted to be
rotated to cause relative axial movement between the bolt member and
the expansion member, the expansion member causing the expandable
shell to be displaced radially outwardly into engagement with the
surrounds of the drilled hole.

5.

An anchor bolt according to claim 4 wherein the bolt member comprises a biaxially oriented plastic material.

6.

An anchor bolt according to either of claims 4 or 5 wherein the bolt member comprises a solid plastic rod.

7.

An anchor bolt according to either of claims 4 or 5 wherein the bolt member comprises a single hollow plastic tube.

8.

An anchor bolt according to either of claims 4 or 5 wherein the bolt member comprises a set of hollow plastic tubes arranged and contained within a jacket tube.

9.

An anchor bolt according to any one of claims 1 to 3 wherein the expansion means comprises a grout which is adapted to be introduced into the expandable shell causing the expandable shell to be displaced radially outwardly into engagement with the surrounds of the drilled hole.

0186991